Europäisches Patentamt

European Patent Office

Office européen des brevets

(11) Veröffentlichungsnummer: **0 245 806 B1**

# (12) EUROPÄISCHE PATENTSCHRIFT

(45) Veröffentlichungstag der Patentschrift: 31.07.91

(21) Anmeldenummer: 87106766.6

(22) Anmeldetag: 09.05.87

(51) Int. Cl.⁵: **B65G 47/51**, B65G 43/08, B67C 7/00

(54) **Puffertransporteur für als Puffer wirkende Förderer von Gefässbehandlungsanlagen für Flaschen oder dgl. Gefässe.**

(30) Priorität: 13.05.86 DE 3616023

(43) Veröffentlichungstag der Anmeldung:
19.11.87 Patentblatt 87/47

(45) Bekanntmachung des Hinweises auf die
Patenterteilung:
31.07.91 Patentblatt 91/31

(84) Benannte Vertragsstaaten:
AT CH DE FR IT LI NL

(56) Entgegenhaltungen:
EP-A- 0 066 119
DE-A- 2 122 152
DE-A- 2 234 991
DE-A- 3 131 352
DE-B- 2 313 663

(73) Patentinhaber: Seitz Enzinger Noll Maschinenbau Aktiengesellschaft
Neckarauer Strasse 140-162 Postfach 645
W-6800 Mannheim 1(DE)

(72) Erfinder: Born, Gerhard
Don-Bosco-Strasse 16
W-6530 Bingen (Rhein)(DE)
Erfinder: Probst, Wolfgang Dipl.-Phys.
Kistlerhofstrasse 119
W-8000 München 70(DE)

## Beschreibung

Die Erfindung betrifft einen Puffertransporteur für als Puffer wirkende Förderer von Gefäßbehandlungsanlagen nach dem Oberbegriff des Anspruches 1.

Innerhalb von Gefäßbehandlungsanlagen für Flaschen oder dgl. Gefäße sind Puffertransporteure in als Puffer wirkenden Förderern zwischengeschaltet zum transportseitigen Verbinden von Gefäßbehandlungsmaschinen, um einen gleichmäßigen und ungestörten Materialfluß bei kurzzeitig unterschiedlichem Durchsatz aber auch bei kurzzeitiger Störung der einem Förderer jeweils vor- und nachgeschalteten Behandlungsmaschine zu gewährleisten. Diese Puffertransporteure sind so zu betreiben, daß auf ihnen selbst bei deren Füllung, also bei höherer Gefäßzufuhr als Gefäßabfuhr Staudruck vermieden wird. Im Flaschenpaket auf die zu transportierenden Flaschen einwirkender Staudruck hat nämlich je nach Druckintensität einen mehr oder weniger starken Oberflächenverschleiß an den Flaschen zur Folge, wodurch letztere in ihrer Festigkeit beeinträchtigt und unansehnlich werden, was insgesamt zu vorzeitiger Unbrauchbarkeit der Flaschen führt.

Ein Puffertransporteur der von der Erfindung vorausgesetzten Art ist aus dem von der Bundesanstalt für Arbeitsschutz und Unfallforschung, Dortmund, herausgegebenen Forschungsbericht Nr. 313, "Planung lärmarmer Transportsysteme für Flaschen und Gläser", W. Probst, Seite 155, Bild 83 bekannt. Er besteht im wesentlichen aus einem regelbaren Puffertransportband, das in einen als Puffer wirkenden Förderer zwischengeschaltet ist und einem Reglerpuffer, der dem Transportbandabschnitt zugeordnet ist, der den Endbereich des dem Puffertransportband stromabwärts unmittelbar nachgeordneten Transportbandes des mehrbahnigen Förderbandes bildet. Ein dem Reglerpuffer zugeordneter Sensor und ein dem Puffertransportband in seinem stromaufwärtigen Endbereich zugeordneter Signalgeber in Form eines Initiators sprechen auf Stau an und sind an einen Regler angeschlossen, der bei Ansprechen des Signalgebers auf Staudruck die Fördergeschwindigkeit des Puffertransportbandes gegenüber derjenigen des Förderers entsprechend dem durch den Sensor ermittelten Befüllungsgrad herabsetzt. Durch diese Maßnahme wird erst bei auf Vollbelegung des Puffertransportbandes erfolgendem Ansprechen des Signalgebers der auf dem Puffertransportband wirksame Staudruck in geringem Umfang herabgesetzt. Hiervon bleibt jedoch die vor Ansprechen des Signalgebers stromabwärts von diesem für die Flaschen und die seitlichen Führungsgeländer bestehende, schädliche Druckbelastung ausgeschlossen, so daß weiterhin die zu Lärm, Abtrieb und somit zu vorzeitiger Unbrauchbarkeit der Flaschen führende Druckbelastung vorhanden ist und deshalb ein erheblicher Bedarf an einem Puffertransporteur besteht, der schonenden und lärmarmen Flaschentransport ermöglicht. Als sehr nachteilig wird auch empfunden, daß der Reglerpuffer fester Bestandteil des dem Puffertransportband unmittelbar nachgeordneten Transportbandes des Förderers ist, wodurch eine den Anforderungen des Reglerpuffers gemäße Beeinflussung der Fördergeschwindigkeit des nachgeordneten Transportbandes nicht möglich ist, da eine solche Fördergeschwindigkeitsbeeinflussung die Förderung auf dem nachgeordneten Transportband stören würde. Der Erfindung liegt daher die Aufgabe zugrunde, einen Puffertransporteur der gattungsbildenden Art anzugeben, der von den ihm im Transportsystem vor- und nachgeschalteten Förderstrecken unabhängig regelbar ist und auf dem während aller Betriebszustände, also selbst bei Vollbelegung, höchstens ein für die Fördergeschwindigkeitsregelung geeigneter geringer, jedoch für Flaschen, Führungsgeländer und Lärmentwicklung unschädlicher Staudruck wirksam ist.

Diese Aufgabe wird erfindungsgemäß dadurch gelöst, daß der Reglerpuffer als eine einen eigenen vom Regler mitgeregelten Transportbandabschnitt aufweisende Transportbandeinheit ausgebildet ist und einen Sensor in Form einer Sensorleiste aufweist und daß der Regler derart ausgebildet ist, daß das den Transportbandabschnitt bildende Reglerpuffer-Transportband und das Puffertransportband mit zunehmender Belegung der Sensorleiste von einer vorgegebenen maximalen Fördergeschwindigkeit auf eine vorgegebene minimale Fördergeschwindigkeit regelbar sind, wobei einerseits über den gesamten Regelvorgang die Fördergeschwindigkeiten des Puffertransportbandes zumindest geringfügig unter denjenigen des Reglerpuffer-Transportbandes liegen, dessen maximale Fördergeschwindigkeit eine sich an der zulässigen Schallemission orientierte Fördergeschwindigkeit und dessen minimale Fördergeschwindigkeit eine geringfügig unter der gerade noch den Durchsatz des Puffertransporteurs gewährleistende Fördergeschwindigkeit liegende Pulkgeschwindigkeit ist und andererseits bei jeweils erfolgender Belegung des Signalgebers bei Beibehaltung der vorgegebenen maximalen Fördergeschwindigkeiten die vorgegebene minimale Fördergeschwindigkeit des Reglerpuffer-Transportbandes auf die Pulkgeschwindigkeit und die vorgegebene minimale Fördergeschwindigkeit des Puffertransportbandes auf eine Fördergeschwindigkeit V "Null" vermindert werden. Hierdurch wird selbst dann, wenn dem Puffertransporteur mehr Flaschen zugeführt als stromabwärts abgenommen werden, erreicht, daß der Puffertransporteur drucklos vom stromaufwärtigen Ende aus gefüllt wird und sich dadurch selbst bei kurzzeitigen Störungen zumindest auf dem Puffertransportband überhaupt kein Staudruck aufbaut. Dieser kann bei lang andauernder Störung auf dem gesamten Puffertransporteur nur die für Flaschen und Führungsgeländer unschädliche Stärke erreichen, wie sie im Reglerpuffer zur Fördergeschwindigkeitsregelung wirksam ist.

Weitere verbessernde und weiterbildende Merkmale des erfindungsgemäßen Puffertransporteurs sind in den Ansprüchen 2 bis 10 wiedergegeben. So kann der erfindungsgemäße Puffertransporteur mit dem Reglerpuffer eine Baugruppe bilden, die selbst oder in Zusammenschaltung mit mehreren solcher Baugruppen den in einem Transportsystem vorhandenen als Puffer wirkenden Förderer bildet, um auf diese Weise einen im wesentlichen druckfreien Flaschentransport über die gesamte Strecke eines als Puffer wirkenden Förderers zu erzielen.

Auch kann erfindungsgemäß der Puffertransporteur bzw. die Baugruppe den als Puffer wirkenden Förderer selbst oder durch Zusammenschaltung von mehreren Puffertransporteuren bzw. Baugruppen bilden, wodurch sich auf dem ganzen, als Puffer wirkenden Förderer des Transportsystems selbst bei vollgestautem Förderer nur ein für die zu transportierenden Flaschen unschädlicher Druck aufbaut.

Um beispielsweise das Einspeisen von Neuglas oder von bei Inspektionszwecken aussortierten unzureichend behandelten Flaschen, aber auch die Vereinigung von mehreren Flaschenströmen zu ermöglichen, ist zum Erreichen einer geregelten Auflockerung nach einer weiteren Ausführungsform der Erfindung das Puffertransportband aus einem den regelbaren Antrieb aufweisenden stromaufwärtigen Transportband und einem nachgeordneten stromabwärtigen Transportband gebildet, an das mindestens ein zuführendes Transportband herangeführt ist und daß antriebsmäßig das stromaufwärtige Transportband über einen Zwischentrieb mit dem regelbaren Antrieb des stromaufwärtigen Transportbandes verbunden ist oder einen eigenen an den Regler angeschlossenen regelbaren Antrieb besitzt, wobei die Fördergeschwindigkeit des stromabwärtigen Transportbandes zumindest während der über das zuführende Transportband erfolgenden Zufuhr von Flaschen höher als die Fördergeschwindigkeit des stromaufwärtigen Transportbandes ist. Auf diese verblüffend einfache Weise ist ein sogenannter Stauförderer gebildet, der das Einspeisen von Flaschen auch bei Vollbelegung ohne aufeinanderprallen gewährleistet und deshalb lärm- und weitestgehend störungsfrei arbeitet.

Die Erfindung ist nachfolgend anhand dreier, in der Zeichnung lediglich schematisch dargestellter Ausführungsbeispiele beschrieben.

Es zeigen

Fig. 1    eine Draufsicht auf einen in ein Transportsystem integrierten Puffertransporteur,

Fig. 2    eine Draufsicht auf einen aus zwei Puffertransporteuren gebildeten, als Puffer wirkenden Förderer,

Fig. 3    eine Draufsicht auf einen Puffertransporteur gemäß einer zweiten Ausführungsform der Erfindung,

Fig. 4    eine Draufsicht auf einen Puffertransporteur gemäß einer dritten Ausführungsform der Erfindung.

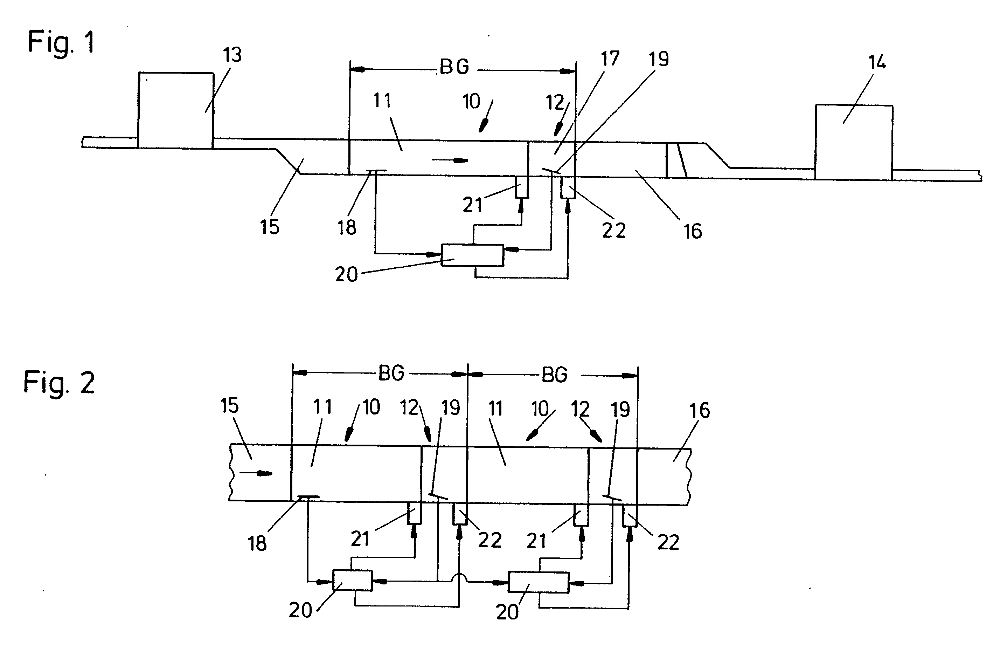

Wie Fig. 1 zeigt, besteht der Puffertransporteur 10 im Sinne der Erfindung aus einem Puffertransportband 11 und einem in Transportrichtung nachgeordneten ein Reglerpuffer-Transportband 17 aufweisenden Reglerpuffer 12, die auch zu einer Baugruppe BG zusammengeschlossen sein können. Im Ausführungsbeispiel ist eine solche Baugruppe BG innerhalb einer Gefäßbehandlungsanlage in ein mit seitlichen Führungsgeländern versehenes Transportsystem zwischengeschaltet, das im Beispielsfalle zwei Gefäßbehandlungsmaschinen, z. B. eine Füll- und Verschließmaschine 13 und eine Etikettiermaschine 14 miteinander verbindet, wobei an die Baugruppe BG die Füll-und Verschließmaschine 13 über eine Auseinanderführung 15, die Etikettiermaschine 14 über eine Zusammenführung 16 angeschlossen sind und die Baugruppe BG, die Auseinanderführung 15 und die Zusammenführung 16 das Transportsystem bilden.

Das Puffertransportband 11 und das Reglerpuffer-Transportband 17 sind in üblicher Weise aufgebaut, und zwar im wesentlichen aus jeweils einem Förderbandgerüst mit umlaufenden, durch einen regelbaren Antrieb angetriebenen Bändern, z. B. Scharnierbandketten, und einem Gleitblech im Übergangsbereich von Puffertransportband 11 zum Reglerpuffer-Transportband 17. Des weiteren weist das Puffertransportband 11 in seinem stromaufwärtigen Bereich einen Signalgeber 18 und der Reglerpuffer 12 eine Sensorleiste 19 auf, die dem Befüllungsgrad des Reglerpuffers 12 entsprechende Steuersignale über eine Signalleitung einem Regler 20 zuführt, an der der Signalgeber 18 und der regelbare Antrieb des Puffertransportbandes 11 sowie der regelbare Antrieb 22 des Reglerpuffer-Transportbandes 17 angeschlossen sind. Der Regler 20 ist in der Weise ausgebildet, daß das Reglerpuffer-Transportband 17 und das Puffertransportband 11 mit zunehmender Belegung der Sensorleiste 19 von einer vorgegebenen maximalen Fördergeschwindigkeit auf eine vorgegebene minimale Fördergeschwindigkeit regelbar sind, wobei einerseits über den gesamten Regelvorgang die Fördergeschwindigkeiten des Puffertransportbandes 11 zumindest geringfügig unter denjenigen des Reglerpuffer-Transportbandes 17 liegen, dessen maximale Fördergeschwindigkeit eine sich an der zulässigen Schallemission orientierte Fördergeschwindigkeit und dessen minimale Fördergeschwindigkeit eine geringfügig unter der gerade noch den Durchsatz des Puffertransporteurs 10 gewährleistende Fördergeschwindigkeit liegende Pulkgeschwindigkeit ist und andererseits bei jeweils erfolgender Belegung des Signalgebers 18 bei Beibehaltung der vorgegebenen maximalen Fördergeschwindigkeiten die vorgegebene minimale Fördergeschwindigkeit des Reglerpuffer-Transportbandes 17 auf die Pulkgeschwindigkeit und die vorgegebene minimale Fördergeschwindigkeit des Puffertransportbandes 11 auf eine Fördergeschwindigkeit V "Null" vermindert werden.

Die vorerwähnte Sensorleiste 19 kann eine Meßeinrichtung in der Art ein, wie sie der DE-A-36 07 858.1 zugrunde liegt oder aus einer beliebigen Anordnung von Sensoren bestehen, die den Staupunkt des Flaschenstaus und damit den Befüllungsgrad des Reglerpuffers 12 in ein Meßsignal umwandeln. Dabei kann es sich um eine Anordnung von wenigen Stauschaltern, um eine ganze Schalterleiste oder um andere zur Ermittlung des Befüllungsgrades geeignete Meßvorrichtungen handeln. Die so definierte "Sensorleiste" kann auch durch Einrichtungen zur Ermittlung der Differenz aus zugeführter und abgeführter Flaschenmenge, z. B. durch optische, induktive oder andere Zähler, ersetzt werden.

Bei Betriebsbeginn, vor dem am Regler 20 einerseits dem Reglerpuffer-Transportband 17 die maximale Fördergeschwindigkeit, z. B. die nach akustischen Gesichtspunkten ausgelegte maximale Geschwindigkeit Vak und die minimale Fördergeschwindigkeit vorgegeben worden sind, z. B. eine geringfügig unter der gerade noch den Durchsatz des Puffertransporteurs 10 gewährleistende Fördergeschwindigkeit liegende Pulkgeschwindigkeit V Pulk und andererseits dem Puffertransportband 11 die minimale und maximale Fördergeschwindigkeit in der Weise vorgegeben worden sind, daß über den gesamten Regelvorgang diese Fördergeschwindigkeiten zumindest unter denjenigen des Reglerpuffer-Transportbandes 17 liegen sowie minimale Fördergeschwindigkeiten für Reglerpuffer-Transportband 17 und Puffertransportband 11 vorgegeben worden sind, die bei Beibehaltung der maximalen Fördergeschwindigkeiten bei jeweils erfolgender Belegung des Signalgebers 18 im Sinne einer Geschwindigkeitsverminderung wirksam werden, und zwar für das Reglerpuffer-Transportband 17 die Pulkgeschwindigkeit V Pulk und für das Puffertransportband 11 eine Fördergeschwindigkeit V "Null", wird bei ebenfalls umlaufenden Förderern von Auseinanderführung 15 und Zusammenführung 16 der Primärstrom aus Flaschen von der Füll- und Verschließmaschine 13 über das den Puffertransporteur 10 bzw. die Baugruppe BG einschließende Transportsystem zur Etikettiermaschine 14 geführt, ohne daß dabei der Signalgeber 18 und die Sensorleiste 19 belegt werden. Hierbei ist die Dichte des Flaschenstroms auf dem Puffertransportband 11 höher als auf dem Regler- Puffertransportband 17, weil die Fördergeschwindigkeit des Puffertransportbandes 11 geringfügig kleiner als diejenige des Reglerpuffer-Transportbandes 17 ist. Sobald entgegen der Transportrichtung über den Förderer der Zusammenführung 16 Stau in den Reglerpuffer 12 einwandert, beispielsweise aufgrund eines durch störungsbedingte Minderleistung der Etikettiermaschine 14 hervorgerufenen Rückstaus, spricht auf diesen Rückstau die Sensorleiste 19 an, und je mehr diese bei weiter andauernder Störung durch den dabei stromaufwärts wandernden Stau belegt wird, umso mehr vermindert der Regler 20, z. B. belegungsproportional durch beispielsweise kontinuierlich an die regelbaren Antriebe 21, 22 über Steuerleitungen abgegebene Steuersignale die Fördergeschwindigkeiten von Reglerpuffer-Transportband 17 und Puffertransportband 11. Diese sich nur auf die Baugruppe BG auswirkende Geschwindigkeitsverminderung bewirkt, daß der Förderer der Auseinanderführung 15 einen breiten Flaschenstrom auf das mit geringerer Fördergeschwindigkeit umlaufende Puffertransportband 11 schiebt, so daß es sich in Transportrichtung, also von rückwärts her, immer mehr anfüllt. Mit zunehmender Geschwindigkeitsverminderung nimmt der Flaschenstrom auf dem Puffertransportband 11 an Dichte zu, ohne daß Druck auf die seitlichen Führungsgeländer des Puffertransportbandes 11 ausgeübt wird. Spricht bei weiter andauernder Störung infolge fast vollständiger Befüllung des Puffertransportbandes 11 der Signalgeber 18 auf Stau an, dann werden die für diesen Belegungsfall des Signalgebers 18 dem Reglerpuffer-Transportband 17 und dem Puffertransportband 11 vorgegebenen Fördergeschwindigkeiten wirksam und es vermindert der Regler 20 in Abhängigkeit von der Belegung der Sensorleiste 19 durch beispielsweise kontinuierlich über die Steuerleitungen an die regelbaren Antriebe 21, 22 abgegebene Steuersignale die Fördergeschwindigkeiten von Reglerpuffer-Transportband 17 und Puffertransportband 11, so daß bei vollständiger Belegung der Sensorleiste 19 für das Reglerpuffer-Transportband 17 die Fördergeschwindigkeit V "Null" erreicht wird.

Nach Beseitigung der Störung nimmt zuerst die im Reglerpuffer 12 gespeicherte Flaschenmenge ab, weil vom Puffertransporteur 10 bzw. von der Baugruppe BG nur das Reglerpuffer-Transportband 17 umläuft, und zwar mit der Fördergeschwindigkeit V Pulk. Sobald aufgrund der Flaschenabnahme auch die Belegung der Sensorleiste 19 abnimmt, wird über den Regler 20 die Fördergeschwindigkeit des Puffertransportbandes 11 in Abhängigkeit vom Belegungsgrad erhöht, so daß das Puffertransportband 11 dem Reglerpuffer-Transportband 17 nunmehr Flaschen zuführt.

Sobald infolge dieser Flaschenentnahme der Signalgeber 18 frei wird, geht der Regler 20 auf den Regelbetrieb über, wie er vor Ansprechen des Signalgebers 18 bestand, es wird jedoch mit abnehmender Belegung der Sensorleiste 19 die Fördergeschwindigkeit von Reglerpuffer-Transportband 17 und Puffertransportband 11 entsprechend der abnehmenden Belegungsabnahme erhöht, wobei das Puffertransportband 11 mit gegenüber der Fördergeschwindigkeit des Reglerpuffer-Transportbandes 17 verminderter Fördergeschwindigkeit umläuft. Die zuvor beschriebene Funktionsweise für das Ausführungsbeispiel nach Fig. 1 ist auch für die in Fig. 2 gezeigte Variante zutreffend, wonach der im Transportsystem zwischen der Auseinanderführung 15 und der Zusammenführung 16 als Puffer wirkende Förderer aus mehreren, im Beispielsfall aus zwei Baugruppen BG gebildet ist. In solchem Fall kann es jedoch zweckmäßig sein, daß die Sensorleiste 19 des Reglerpuffers 12 der jeweils, stromaufwärtig einer benachbarten Baugruppe BG angeordneten Baugruppe BG zugleich die Funktion des Signalgebers 18 des Puffertransportbandes 11 der benachbarten Baugruppe BG miterfüllt und somit der - Signalgeber 18 entfallen kann.

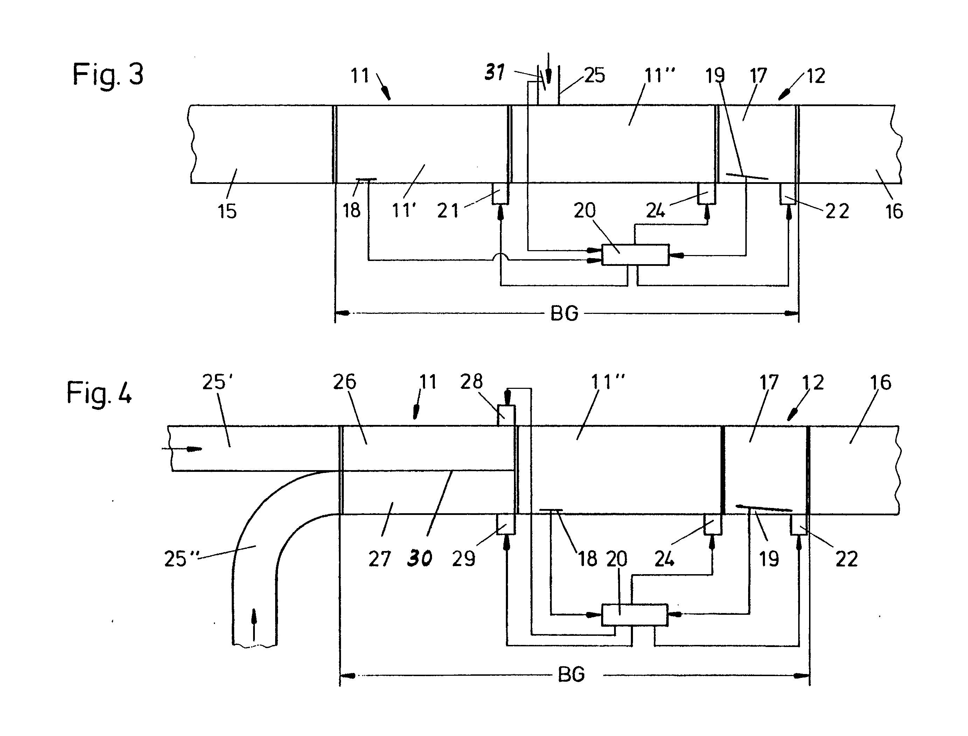

Die in Fig. 3 gezeigte zweite Ausführungsform der Erfindung zeichnet sich dadurch aus, daß das Puffertransportband 11 aus einem stromaufwärtigen Transportband 11′ und einem nachgeordneten stromabwärtigen Transportband 11″ gebildet ist, wobei das stromaufwärtige Transportband 11′ den regelbaren Antrieb 21 des Puffertransportbandes 11 aufweist und das stromabwärtige Transportband 11″ über einen nicht dargestellten üblichen Zwischentrieb, z. B. einen Kettentrieb mit dem regelbaren Antrieb 21 antriebsmäßig verbunden ist oder, wie Fig. 3 zeigt, für das stromabwärtige Transportband 11″ ein eigener ebenfalls an den Regler 20 angeschlossener regelbarer Antrieb 24 vorgesehen ist. Ferner ist an das stromabwärtige Transportband 11″ mindestens ein zuführendes Transportband 25 herangeführt, z. B. seitlich herangeführt und dient beispielsweise zur Einspeisung von mittels eines Inspektors aussortierten, ungenügend gereinigten Flaschen, sofern die Baugruppe BG in ein einen Inspektor und eine Reinigungsmaschine verbindendes Transportsystem zwischengeschaltet ist. Damit diese nochmals einer Reinigungsbehandlung zuzuführenden Flaschen ungehindert in den Transportweg des Puffertransportbandes 11 eingespeist werden können, ist für das stromabwärtige Transportband 11″ eine am Regler 20 vorgebbare, über der Fördergeschwindigkeit des stromaufwärtigen Transportbandes 11′ liegende Geschwindigkeit vorgesehen. Dadurch ist die Dichte des Flaschenstroms im Bereich des stromabwärtigen Transportbandes 11″ auch bei dessen Maximalbelegung geringer als auf dem stromaufwärtigen Transportband 11′ und es können die Flaschen ungehindert eingespeist werden. Die zwischen dem stromaufwärtigen Transportband 11′ und stromabwärtigen Transportband 11″ vorgesehene Geschwindigkeitsabstufung besteht bei periodischer Zufuhr von Flaschen über das seitlich herangeführte zuführende Transportband 25 während der Dauer der Zufuhr und es kann durch jeweiliges Ansprechen eines dem zuführenden Transportband 25 zuzuordnenden und an den Regler 20 anzuschließenden Signalgebers 31 ausgelöst werden. Dieses Auslösen bewirkt, daß mit zunehmender Belegung der Sensorleiste 19 unter Beibehaltung der vorgegebenen Geschwindigkeitsabstufung die Fördergeschwindigkeiten von stromaufwärtigen Transportband 11′ und stromabwärtigen Transportband 11″ vom vorgegebenen Maximalwert auf den Wert "Null" kontinuierlich vermindert werden, der bei vollständiger Belegung der Sensorleiste 19 erreicht wird. Während der übrigen Zeit, bei der keine Flaschen einzuspeisen sind, laufen stromaufwärtiges Transportband 11′ und stromabwärtiges Transportband 11″ mit gleicher Geschwindigkeit um, so daß für diese Betriebszeit auch die vorangehend zu den Ausführungsbeispielen gemäß Fig. 1 und 2 beschriebene Funktionsweise zutreffend ist. Es kann aber auch eine ständige Einspeisung von über das zuführende Transportband 25 herangeführte Flaschen ohne wirksame Signalgeber 18, 31 vorgenommen werden. In diesem bevorzugten Fall besteht ständig die vorgegebene Geschwindigkeitsabstufung und es wird stets bei zunehmender Belegung der Sensorleiste 19 die Fördergeschwindigkeit des stromaufwärtigen und des stromabwärtigen Transportbandabschnittes 11′, 11″ mit zunehmender Belegung der Sensorleiste 19 von ihrem vorgegebenen Maximalwert auch den Wert "Null" kontinuierlich vermindert, wobei die Fördergeschwindigkeit des Reglerpuffer-Transportbandes 17 die Geschwindigkeit des nachgeordneten Transportbandes 11″ aufweist oder geringfügig darunter liegt.

Wie Fig. 4 zeigt, kann in einer dritten Ausführungsform der Erfindung die Einspeisung der Flaschen in den durch das stromabwärtige Transportband 11″ gebildeten Bereich des Puffertransportbandes 11 auch über das stromaufwärtige Transportband 11′ erfolgen, wenn mindestens zwei Flaschenströme durchsatzkontrolliert und lärmarm zu vereinigen sind. Für diesen Zweck ist das stromaufwärtige Transportband 11′ in beispielsweise zwei durch ein Führungsgeländer 30 getrennte, jeweils einen regelbaren Antrieb 28 bzw. 29 aufweisende Transportstrecken 26 und 27 unterteilt, wobei die regelbaren Antriebe 28, 29 an den Regler 20 angeschlossen sind und die jeweilige Transportstrecke 26 und 27 den Endbereich eines an das stromabwärtige Transportband 11′ herangeführten zuführenden Transportbandes 25′ bzw. 25″ bildet. Für die vorzunehmende Vereinigung kann es zweckmäßig sein, den regelbaren Antrieben 28, 29 ein am Regler 20 einstellbares Drehzahlverhältnis vorzugeben, das ggf. elektrisch angesteuert verändert werden kann. Durch diese Bauweise kann selbst bei Rückstau auf dem nicht vollgepackten, stromabwärtigen Transportband 11″ eine kontrollierte Vereinigung der mittels der zuführenden Transportbänder 25′, 25″ herangeführten Flaschenströme bei gleichbleibendem Gesamtdurchsatz der Baugruppe BG erfolgen.

## Patentansprüche

1. Puffertransporteur (10) für als Puffer wirkende Förderer innerhalb eines Transportsystems von Flaschenbehandlungsanlagen mit einem einen regelbaren Antrieb und einen Signalgeber (18) im stromaufwärtigen Endbereich aufweisenden Puffertransportband (11), mit einem dem stromabwärtigen Endbereich des Puffertransportbandes nachgeschalteten, aus einem Transportbandabschnitt eines wegführenden Transportbandes und einem Sensor gebildeten Reglerpuffer (12) und mit einem Regler (20) an den regelbarer Antrieb und Signalgeber des Puffertransportbandes sowie der Sensor angeschlossen sind, dadurch gekennzeichnet, daß der Reglerpuffer (12) als eine einen eigenen vom Regler (20) mitgeregelten Transportbandabschnitt (17) aufweisende Transportbandeinheit ausgebildet ist und einen Sensor in Form einer Sensorleiste (19) aufweist und daß der Regler (20) derart ausgebildet ist, daß das den Transportbandabschnitt bildende Reglerpuffer-Transportband (17) und das Puffertransportband (11) mit zunehmender Belegung der Sensorleiste (19) von einer vorgegebenen maximalen Fördergeschwindigkeit auf eine vorgegebene minimale Fördergeschwindigkeit regelbar sind, wobei einerseits über den gesamten Regelvorgang die Fördergeschwindigkeiten des Puffertransportbandes (11) zumindest geringfügig unter denjenigen des Reglerpuffer-Transportbandes (17) liegen, dessen maximale Fördergeschwindigkeit eine sich an der zulässigen Schallemission orientierte Fördergeschwindigkeit Vak und dessen minimale Fördergeschwindigkeit eine geringfügig unter der gerade noch den Durchsatz des Puffertransporteurs (10) gewährleistende Fördergeschwindigkeit liegende Pulkgeschwindigkeit ist und andererseits bei jeweils erfolgender Belegung des Signalgebers (18) bei Beibehaltung der vorgegebenen maximalen Fördergeschwindigkeiten die vorgegebene minimale Fördergeschwindigkeit des Reglerpuffer-Transportbandes (17) auf die Pulkgeschwindigkeit und die vorgegebene minimale Fördergeschwindigkeit des Puffertransportbandes (11) auf eine Fördergeschwindigkeit V "Null" vermindert werden.

2. Puffertransporteur nach Anspruch 1, dadurch gekennzeichnet, daß das Reglerpuffer-Transportband (17) und das Puffertransportband (11) mit zunehmender Belegung der Sensorleiste (19) von der vorgegebenen maximalen Fördergeschwindigkeit auf die vorgegebene minimale Fördergeschwindigkeit belegungsproportional regelbar sind.

3. Puffertransporteur nach den Ansprüchen 1 und 2, dadurch gekennzeichnet, daß das Puffertransportband (11) und das Reglerpuffer-Transportband (17) zu einer Baugruppe (BG) zusammengeschlossen sind.

4. Puffertransporteur nach Anspruch 3, dadurch gekennzeichnet, daß mehrere Baugruppen (BG) aus Puffertransportband (11) und Reglerpuffer (12) zusammengeschlossen sind.

5. Puffertransporteur nach den Ansprüchen 3 und 4, dadurch gekennzeichnet, daß eine Baugruppe (BG) aus Puffertransportband (11) und Reglerpuffer (12) oder mehrere zusammengeschlossene Baugruppen (BG) aus Puffertransportband (11) und Reglerpuffer (12) den als Puffer wirkenden Förderer bilden.

6. Puffertransporteur nach den Ansprüchen 4 oder 5, dadurch gekennzeichnet, daß die Sensorleiste (19) des Reglerpuffers (12) der jeweils stromaufwärtig einer benachbarten Baugruppe (BG) angeordneten Baugruppe (BG) zugleich der Signalgeber (18) des Puffertransportbandes (11) der benachbarten Baugruppe (BG) ist.

7. Puffertransporteur nach den Ansprüchen 1 bis 6, dadurch gekennzeichnet, daß das Puffertransportband (11) aus einem den regelbaren Antrieb (21) aufweisenden stromaufwärtigen Transportband (11′) und einem nachgeordneten stromabwärtigen Transportband (11″) gebildet ist, an das mindestens ein zuführendes Transportband (25) herangeführt ist und daß antriebsmäßig das stromabwärtige Transportband (11″) über einen Zwischentrieb mit dem regelbaren Antrieb (21) des stromaufwärtigen Transportbandes (11′) verbunden ist oder ei-

nen eigenen an den Regler (20) angeschlossenen regelbaren Antrieb (24) besitzt, wobei die Fördergeschwindigkeit des stromabwärtigen Transportbandes (11″) zumindest während der über das zuführende Transportband (25) erfolgenden Einspeisung von Flaschen höher als die Fördergeschwindigkeit des stromaufwärtigen Transportbandes (11′) ist.

8. Puffertransporteur nach Anspruch 7, dadurch gekennzeichnet, daß das stromaufwärtige Transportband (11′) und das sich an das stromabwärtige Transportband (11″) anschließende Reglerpuffer-Transportband (17) mit gleichen Fördergeschwindigkeiten umlaufen.

9. Puffertransporteur nach Anspruch 7, dadurch gekennzeichnet, daß das stromaufwärtige Transportband (11′) des Puffertransportbandes (11) in mindestens zwei durch ein Führungsgeländer (30) voneinander getrennte Transportstrecken (26, 27) unterteilt ist und die jeweilige Transportstrecke 26 bzw. 27) den Endbereich eines an das stromabwärtige Transportband (11″) herangeführten Zutransporteurs (25′ bzw. 25″) bildet.

10. Puffertransporteur nach Anspruch 9, dadurch gekennzeichnet, daß jeder Transportstrecke (26 bzw. 27) ein an den Regler (20) angeschlossener regelbarer Antrieb (28 bzw. 29) zugeordnet ist, wobei den regelbaren Antrieben (28, 29) ein am Regler (20) einstellbares Drehzahlverhältnis vorgebbar ist.

## Claims

1. Buffer transporter (10) for conveyors acting as buffers within a transport system of bottle treatment plants with a buffer transport belt (11), which displays a regulable drive and a signal transmitter (18) in the upstream end region, with a regulating buffer (12), which is connected downstream of the downstream end region of the buffer transport belt and formed of a sensor and a transport belt portion of a transport belt that leads away, and with a regulator (20), to which the regulable drive and the signal transmitter of the buffer transport belt as well as the sensor are connected, characterised thereby, that the regulating buffer (12) is constructed a transport belt unit displaying an own transport belt portion (17) also regulated by the regulator (20) and a sensor in the form of a sensor strip (19) and that the regulator (20) is constructed in such a manner that the regulating buffer transport belt (17), which forms the transport belt portion, and the buffer transport belt (11) are regulable from a preset maximum conveying speed to a preset minimum conveying speed when the occupancy of the sensor strip (19) is increasing, wherein the conveying speeds of the buffer transport belt (11) on the one hand over the entire regulation process lie at least slightly below those of the regulating buffer transport belt (17), the maximum conveying speed of which is a conveying speed Vak related to the permissible sound emission and the minimum conveying speed of which is a bulk speed lying slightly below the conveying speed just still assuring the throughput of the buffer transporter (10) and on the other hand, for the respectively occurring occupancy of the signal transmitter (18) and with maintenance of the preset maximum conveying speeds, the preset minimum conveying speed of the regulating buffer transport belt (17) is reduced to the bulk speed and the preset minimum conveying speed of the buffer transport belt (11) is reduced to a conveying speed V "zero".

2. Buffer transporter according to claim 1, characterised thereby, that the regulating buffer transport belt (17) and the buffer transport belt (11) are regulable on increasing occupancy of the sensor strip (19) from the preset maximum conveying speed to the preset minimum conveying speed in proportion to the occupancy.

3. Buffer transporter according to the claims 1 and 2, characterised thereby, that the buffer transport belt (11) and the regulating buffer transport belt (17) are combined into one assembly (BG).

4. Buffer transporter according to claim 3, characterised thereby, that several assemblies (BG) of buffer transport belt (11) and regulating buffer (12) are combined.

5. Buffer transporter according to the claims 3 and 4, characterised thereby, that one assembly (BG) of buffer transport belt (11) and regulating buffer (12) or several combined assemblies (BG) of buffer transport belt (11) and regulating buffer (12) form the conveyor acting as buffer.

6. Buffer transporter according to the claims 4 or 5, characterised thereby, that the sensor strip (19) of the regulating buffer (12) of the assembly (BG), which is respectively arranged upstream of a neighbouring assembly (BG), is at the same time the signal transmitter (18) of the buffer transport belt (11) of the neighbouring assembly (BG).

7. Buffer transporter according to the claims 1 to 6, characterised thereby, that the buffer transport belt (11) is formed of an upstream transport belt (11') displaying the regulable drive (21) and a downstream transport belt (11"), which is connected therebehind and to which at least one feeding transport belt (25) is led, and that the downstream transport belt (11") is connected in terms of drive by way of an intermediate drive with the regulable drive (21) of the upstream transport belt (11') or possesses an own regulable drive (24) connected to the regulator (20), wherein the conveying speed of the downstream transport belt (11") is higher than the bulk speed of the upstream transport belt (11') at least during the feeding-in of bottles taking place by way of the feeding transport belt (25).

8. Buffer transporter according to claim 7, characterised thereby, that the upstream transport belt (11') and the regulating buffer transport belt (17) adjoining the downstream transport belt (11") circulate at equal conveying speed.

9. Buffer transporter according to claim 7, characterised thereby, that the upstream transport belt (11') of the buffer transport belt (11) is subdivided into at least two transport sections (26, 27) separated one from the other by a guide rail (30) and the respective transport section (26 or 27) forms the end region of a feed transporter (25' or 25") led to the downstream transport belt (11").

10. Buffer transporter according to claim 9, characterised thereby, that each transport section (26 or 27) is associated with a respective regulable drive (28 or 29) connected to the regulator (20), wherein a rotational speed ratio adjustable at the regulator (20) is presettable for the regulable drives (28, 29).

**Revendications**

1. Transporteur-accumulateur (10) pour un convoyeur agissant comme accumulateur a l'intérieur d'un système de transport d'installations de traitement de bouteilles, comportant un tapis transporteur accumulateur (11) qui présente un mécanisme d,entraînement réglable et un émetteur (18) de signaux dans la zone d'extrémité amont, comportant aussi un accumulateur régulateur (12) monté en aval de la zone d'extrémité aval du tapis transporteur accumulateur et formé d'une portion de tapis transporteur d'enlèvement et d'un détecteur, et comportant aussi un régulateur (20) auquel sont reliés le mécanisme d'entraînement réglable et l'émetteur de signaux du tapis transporteur accumulateur ainsi que le détecteur, transporteur-accumulateur caractérisé par le fait que l'accumulateur régulateur (12) est constitué sous forme d'un ensemble formant tapis transporteur et présentant une portion propre de tapis transporteur (17) régulée par le régulateur (20) et présente un détecteur sous forme d'une file (19) de détecteurs et par le fait que le régulateur (20) est conçu de façon telle que le tapis transporteur accumulateur régulateur (17), formant la portion de tapis transporteur, et le tapis transporteur accumulateur (11) sont réglables pour passer, au fur et à mesure d'une activation croissante de la file (19) de détecteurs d'une vitesse de transport maximale prescrite, à une vitesse de transport minimale prescrite, étant précisé d'une part que, pendant tout le processus de régulation, les vitesses de transport du tapis transporteur accumulateur (11) se situent au moins légèrement en-dessous de celles du tapis transporteur accumulateur régulateur (17) dont la vitesse de transport maximale est une vitesse de transport Vak définie par le niveau sonore autorisé et dont la vitesse de transport minimale est une vitesse de colonne légèrement inférieure á la vitesse de transport qui garantit juste encore le débit du transporteur-accumulateur (10), et que d'autre part, chaque fois que se produit l'activation de l'émetteur (18) de signaux, tout en conservant les vitesses de transport maximales prescrites, on réduit la vitesse de transport minimale prescrite du tapis transporteur accumulateur régulateur (17) à la vitesse de colonne et la vitesse de transport minimale prescrite du tapis transporteur accumulateur (11) à une vitesse de transport V nulle.

2. Transporteur-accumulateur selon la revendication 1, caractérisé par le fait qu'au fur et à mesure d'une activation croissante de la file (19) de détecteurs, le tapis transporteur accumulateur régulateur (17) et le tapis transporteur accumulateur (11) sont réglables pour passer de la vitesse de transport maximale prescrite à la vitesse de transport minimale prescrite, proportionnellement à l'activation.

3. Transporteur-accumulateur selon les revendications 1 et 2, caractérisé par le fait que le tapis transporteur accumulateur (11) et le tapis transporteur accumulateur régulateur (10) sont regroupés pour former un ensemble (BG).

4. Transporteur-accumulateur selon la revendication 3, caractérisé par le fait que l'on regroupe plusieurs ensembles (BG) constitués d'un tapis transporteur accumulateur (11) et d'un accumulateur régulateur (12).

5. Transporteur-accumulateur selon les revendications 3 et 4, caractérisé par le fait qu'un ensemble (BG) , constitué d'un tapis transporteur accumulateur (11) et d'un accumulateur régulateur (12), ou plusieurs ensembles (BG), regroupés, constitués d'un tapis transporteur accumulateur (11) et d'un accumulateur régulateur (12), forment le convoyeur agissant comme accumulateur.

6. Transporteur-accumulateur selon les revendications 4 ou 5, caractérisé par le fait que la file (19) de détecteurs de l'accumulateur régulateur (12) de l'ensemble (BG) respectivement disposé en amont d'un ensemble (BG) voisin constitue en même temps l'émetteur (18) de signaux du tapis transporteur accumulateur (11) de l'ensemble (BG) voisin.

7. Transporteur-accumulateur selon les revendications 1 à 6, caractérisé par le fait que le tapis transporteur accumulateur (11) est formé d'un tapis transporteur (11') amont, présentant le mécanisme d'entraînement réglable (21), et d'un tapis transporteur (11") qui est disposé en aval et auquel est relié au moins un tapis transporteur d'amenée (25), et par le fait qu'au point de vue entraînement, le tapis transporteur aval (11") est relié, par l'intermédiaire d'un mécanisme intermédiaire, au mécanisme d'entraînement réglable (21) du tapis transporteur amont (11'), ou bien possède un mécanisme d'entraînement propre (24), réglable, relié au régulateur (20),t étant précisé que la vitesse de transport du tapis transporteur aval (11") est, au moins pendant l'amenée de bouteilles qui se fait par l'intermédiaire du tapis transporteur d'amenée (25), supérieure à la vitesse de transport du tapis transporteur amont (11').

8. Transporteur-accumulateur selon la revendication 7, caractérisé par le fait que le tapis transporteur amont (11') et le tapis transporteur accumulateur régulateur (17) qui se raccorde au tapis transporteur aval (11"), tournent avec la même vitesse de transport.

9. Transporteur-accumulateur selon la revendication 7, caractérisé par le fait que le tapis transporteur amont (11') du tapis transporteur accumulateur (11) est divisé en au moins deux longueurs de transport (26,27) séparées l'une de l'autre par une barrière de guidage (30), et que la longueur de transport (26 ou 27) respective forme la zone d'extrémité d'un transporteur d'amenée (25' ou 25") relié au tapis transporteur aval (11").

10. Transporteur-accumulateur selon la revendication 9, caractérisé par le fait qu'à chaque longueur de transport (26 ou 27) correspond un mécanisme d'entraînement réglable (28 ou 29) relié au régulateur (20), étant précisé qu'un rapport de vitesses de rotation, réglable au régulateur (20), peut être prescrit aux mécanismes d'entraînement réglables (28,29).

Fig. 1

Fig. 2

EP 0 245 806 B1

Fig. 3

Fig. 4

EP 0 245 806 B1